# EUROPÄISCHE PATENTSCHRIFT

(11) **EP 3 310 939 B1**
(45) Veröffentlichungstag und Bekanntmachung des Hinweises auf die Patenterteilung: **11.03.2020**
(21) Anmeldenummer: 16725063.8
(22) Anmeldetag: 13.05.2016
(51) Int. Cl.: C23C 4/12, F02F 1/00, B05B 7/22, B05B 12/00, B05B 13/06

(54) **THERMISCHES SPRITZVERFAHREN SOWIE THERMISCHER SPRITZBRENNER**
THERMAL SPRAYING PROCESS AND THERMAL SPRAYER
PROCÉDÉ DE PROJECTION THERMIQUE ET TORCHE DE PROJECTION THERMIQUE

(30) Priorität: 19.06.2015 DE 102015109873
(43) Veröffentlichungstag der Anmeldung: 25.04.2018
(73) Patentinhaber: KS HUAYU AluTech GmbH, 74172 Neckarsulm (DE)
(72) Erfinder: KLIMESCH, Christian, 76229 Karlsruhe (DE); SCHALLER, Andreas, 74842 Billigheim (DE); SCHRAMM, Leander, 07407 Remda-Teichel (DE); GEBERT, Dieter, 74613 Öhringen-Verrenberg (DE)
(74) Vertreter: terpatent Patentanwälte ter Smitten Eberlein-Van Hoof Rütten Daubert
(86) Internationale Anmeldenummer: PCT/EP2016/060880
(87) Internationale Veröffentlichungsnummer: WO 2016/202511

(56) Entgegenhaltungen:
- EP-A2- 2 019 151
- WO-A1-2012/010673
- WO-A2-2004/005575
- US-A1- 2004 245 354

## Beschreibung

Die Erfindung betrifft ein thermisches Spritzverfahren zum Beschichten der Innenfläche eines Zylinders einer Brennkraftmaschine oder Kolbenmaschine sowie einen thermischen Spritzbrenner zum Aufbringen einer thermischen Spritzschicht auf die Innenfläche eines Zylinders einer Brennkraftmaschine oder Kolbenmaschine.

Thermische Spritzbrenner sind aus dem Stand der Technik bekannt und werden zur Beschichtung von Oberflächen verwendet. Beispielsweise ist das PTWA- (Plasma Transferred Wire Arc Spraying) oder RSW- (Rotating Single Wire) Verfahren bekannt, durch das in der Automobilindustrie die Laufflächen von Zylinderbohrungen in Verbrennungskraftmaschinen beschichtet werden. Hierzu wird dem Spritzbrenner über eine Vorschubvorrichtung ein Draht zugeführt, dessen Partikel in einem Gasstrom auf die Innenfläche der Zylinder aufgespritzt werden.

Zum Erreichen einer gleichbleibenden Qualität des Beschichtungsprozesses ist es notwendig, dessen Ergebnisse zu kontrollieren. Dies gilt insbesondere, da ein nachfolgender Honprozess sehr sensibel auf Unregelmäßigkeiten reagiert, die durch den thermischen Beschichtungsprozess des Zylinders einer Brennkraftmaschine oder Kolbenmaschine entstehen können. Es ist somit wichtig, ein fehlerhaftes Bauteil zu erkennen und nötigenfalls nachzubearbeiten.

Bisher wurde die Qualität des thermischen Spritzprozesses durch einen Mitarbeiter kontrolliert, indem dieser die beschichtete Zylinderlaufbahn visuell inspiziert.

Zusätzlich ist es aus der EP 2 019 151 A2 bekannt, am thermischen Spritzbrenner einen Lasersensor anzubringen, der mit dem Spritzbrenner im Zylinder rotiert und nachlaufend zum Spritzbrenner die gespritzte Oberfläche detektiert, um Erhebungen zu identifizieren, die in einem nachfolgenden Schneidprozess entfernt werden können.

Des Weiteren ist es aus der WO 2012/010673 A1 bekannt, mit einer Kamera einen Spritzstrahl und den den Spritzstrahl umgebenden Bereich zu beobachten und auf einen Fehler im Beschichtungsprozess zu schließen, wenn die Kamera außerhalb des Spritzstrahls Lichtbögen wahrnimmt. Bei einer Verwendung dieser Kamera in einem Zylinder ist die Kamera den umherfliegenden Spritzwerkstoffen ausgesetzt.

Aufgabe der Erfindung ist es, ein thermisches Spritzverfahren zum Beschichten der Innenfläche eines Zylinders einer Brennkraftmaschine oder Kolbenmaschine bereitzustellen, das eine einfachere Überprüfung des Ergebnisses des Beschichtungsprozesses ermöglicht, sowie die Bereitstellung eines entsprechenden thermischen Spritzbrenners.

Die Lösung der Aufgabe erfolgt erfindungsgemäß bezüglich des thermischen Spritzverfahrens durch ein Verfahren mit den Merkmalen des Anspruchs 1 und bezüglich des Spritzbrenners durch einen Spritzbrenner mit den Merkmalen des Anspruchs 5.

Das thermische Spritzverfahren zum Beschichten der Innenfläche eines Zylinders einer Brennkraftmaschine oder Kolbenmaschine umfasst die folgenden Verfahrensschritte:
Es wird eine thermische Spritzschicht auf die Innenfläche des Zylinders aufgebracht. Dies kann beispielsweise unter Verwendung des aus dem Stand der Technik bekannten PTWA/RSW-Verfahrens erfolgen.

Erfindungsgemäß wird die Umgebung des Spritzstrahls durch eine optische Sensorvorrichtung erfasst. Die optische Sensorvorrichtung erfasst somit einen Raum außerhalb des Spritzstrahls und oberhalb der oberen Grundfläche des Zylinders, d. h. außerhalb des Zylinders, um Partikel des Spritzwerkstoffs zu detektieren. Sofern im Bereich, der durch die optische Sensorvorrichtung überwacht wird, außerhalb des Spritzstrahls Partikel des Spritzwerkstoffs, der dem Spritzbrenner zugeführt wird, detektiert werden, wird ein Fehler im Beschichtungsprozess angenommen. Sofern somit Partikel des Spritzwerkstoffs, beispielsweise glühende Drahtstücke, aus dem zu beschichtenden Zylinder hinaus aus dessen oberer Öffnung fliegen, können diese durch die optische Sensorvorrichtung detektiert werden. Durch die Anordnung der optischen Sensorvorrichtung oberhalb des Zylinders, ist ein besonders einfacher Aufbau der Vorrichtung möglich, da die optische Sensorvorrichtung nicht unbedingt in den Zylinder eingeführt werden muss.

Die Erfindung betrifft ferner einen thermischen Spritzbrenner zum Aufbringen einer thermischen Spritzschicht auf die Innenfläche eines Zylinders einer Brennkraftmaschine oder Kolbenmaschine.

Der erfindungsgemäße thermische Spritzbrenner umfasst die beschriebene optische Sensorvorrichtung zum optischen Erfassen der Umgebung des Spritzstrahls, nämlich eines Raums außerhalb des Spritzstrahls. Hierbei kann es sich beispielsweise um eine Kamera oder einen Lasersensor handeln.

Dabei ist die optische Sensorvorrichtung auf einen Bereich oberhalb der oberen Grundfläche des Zylinders ausgerichtet, um Partikel des Spritzwerkstoffs, die aus der oberen Öffnung des Zylinders herausfliegen, zu detektieren.

Durch die erfindungsgemäße Verwendung einer optischen Sensorvorrichtung können somit Fehler im Beschichtungsprozess automatisiert erkannt werden, so dass eine Kontrolle der Qualität des Beschichtungsprozesses durch einen Menschen entfallen kann. Das fehlerhafte Bauteil kann dann nötigenfalls nachbearbeitet werden. Erfindungsgemäß wird nicht unmittelbar die beschichtete Oberfläche überwacht, sondern die Umgebung des Spritzstrahls, nämlich ein Raum außerhalb des Spritzstrahls. Sofern sich Partikel des Spritzwerkstoffs außerhalb des Spritzstrahls befinden, deren Größe und/oder andere Parameter einen definierten Schwellwert überschreitet, wird davon ausgegangen, dass es zu Unregelmäßigkeiten im Beschichtungsprozess gekommen ist. Beispielsweise kann es vorkommen, dass der Draht, der dem Spritzbrenner als Spritzwerkstoff zugeführt wird, nicht gleichmäßig abgeschmolzen wird und somit größere Drahtstücke außerhalb des Spritzstrahls durch die Beschichtungskabine fliegen. Derartige Partikel können mit Hilfe der erfindungsgemäßen optischen Sensorvorrichtung detektiert werden.

Es ist bevorzugt, Parameter wie z.B. die Größe, Häufigkeit, Lichtintensität, Fluggeschwindigkeit und/oder Flugkurve der außerhalb des Spritzstrahls erfassten Partikel des Spritzwerkstoffs zu überwachen. Sofern diese Parameter definierte Schwellwerte überschreiten, wird ein Fehler im Beschichtungsprozess angenommen. Die genannten Parameter können durch Softwarealgorithmen oder Filter ausgewertet werden, so dass hierdurch ein Rückschluss auf die Qualität des Beschichtungsprozesses getroffen werden kann. Beispielsweise kann die summierte Partikelfläche von allen außerhalb des Spritzstrahls erfassten Partikel des Spritzwerkstoffs, die vorzugsweise eine definierte Größe überschreiten, überwacht werden. Sofern diese summierte Partikelfäche einen definierten Grenzwert überschreitet, kann ein Fehler im Beschichtungsprozess angenommen werden. Ferner kann beispielsweise ein Verlauf eines der genannten Werte durch das Bilden der mathematischen Ableitung dieses Werts überwacht werden. Beispielsweise kann so die Zunahme der Partikelfäche, die Zunahme der Häufigkeit von erfassten Partikeln, etc. überwacht werden. Sofern diese Ableitung einen definierten Schwellwert überschreitet, kann ebenfalls von einem Fehler im Beschichtungsprozess ausgegangen werden.

Weiterhin kann beispielsweise durch Softwarealgorithmen die Länge der Spratzer, die Anzahl der Spratzer, deren Flugbahn oder ihre Größe (beispielsweise als zweidimensionale Fläche, sofern nur eine Kamera verwendet wird) berücksichtigt werden. Auch von diesen Größen können Ableitungen gebildet werden, sodass beispielsweise eine Flächenzunahme detektiert wird. Sofern die ermittelte Steigung oder Ableitung einen gewissen Schwellwert überschreitet, kann ebenfalls von einem Fehler im Beschichtungsprozess ausgegangen werden.

Es ist bevorzugt, dass die optische Sensorvorrichtung eine Kamera ist.

In einer weiteren bevorzugten Ausführungsform kann die optische Sensorvorrichtung ein Lasersensor sein.

Im Folgenden wird eine bevorzugte Ausführungsform der Erfindung anhand einer Figur erläutert.

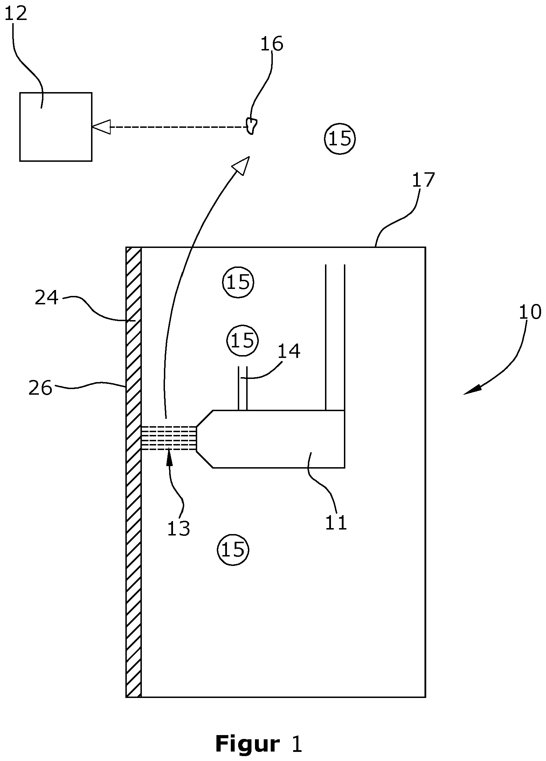

Figur 1 zeigt einen Zylinder 10 einer nicht dargestellten Brennkraftmaschine oder Kolbenmaschine, der durch einen thermischen Spritzbrenner 11 beschichtet wird. Hierzu wird dem thermischen Spritzbrenner 11 ein Draht 14 durch eine nicht dargestellte Drahtzuführvorrichtung zugeführt. Der thermische Spritzbrenner 11 spritzt die Beschichtung in Form eines Spritzstrahls 13 auf die Innenfläche 26 des Zylinders 10, so dass hierauf eine Beschichtung 24 aufgetragen wird. Erfindungsgemäß wird durch die optische Sensorvorrichtung 12 ein Bereich 15 außerhalb des Spritzstrahls 13 überwacht, um Partikel 16 des Spritzwerkstoffs 14 außerhalb des Spritzstrahls 13 zu detektieren. Diese können sich beispielsweise, wie in Figur 1 dargestellt, oberhalb der oberen Grundfläche 17 des Zylinders 10 befinden und von der Kamera 12 erfasst werden. Sofern Partikel 16 detektiert werden, kann von einem Fehler im Beschichtungsprozess ausgegangen werden, so dass das zu beschichtende Bauteil nachbearbeitet werden kann.

## Patentansprüche

1. Thermisches Spritzverfahren zum Beschichten der Innenfläche (24) eines Zylinders (10) einer Brennkraftmaschine oder Kolbenmaschine, wobei das Verfahren die folgenden Schritte aufweist:
- Aufbringen einer thermischen Spritzschicht (24) auf die Innenfläche (26) des Zylinders (10),
- Optisches Erfassen der Umgebung (15) des Spritzstrahls (13), nämlich eines Raums außerhalb des Spritzstrahls (13) durch eine optische Sensorvorrichtung (12),
wobei, sofern im überwachten Bereich (15) außerhalb des Spritzstrahls (13) und oberhalb der oberen Grundfläche (17) des Zylinders (10), d. h. außerhalb des Zylinders (10), durch die optische Sensorvorrichtung (12) Partikel des Spritzwerkstoffs (14), der dem Spritzbrenner (11) zugeführt wird, detektiert werden, deren Parameter einen definierten Schwellwert überschreiten, ein Fehler im Beschichtungsprozess angenommen wird.

2. Thermisches Spritzverfahren nach Anspruch 1, **dadurch gekennzeichnet, dass** ein Fehler im Beschichtungsprozess angenommen wird, wenn die Größe, Häufigkeit, Lichtintensität, Fluggeschwindigkeit und/oder Flugkurve und deren Länge der außerhalb des Spritzstahls (13) erfassten Partikel (16) des Spritzwerkstoffs (14) oder die mathematische Ableitung oder Summierung der genannten Größen einen definierten Schwellwert überschreiten.

3. Thermisches Spritzverfahren nach Anspruch 1 oder 2, **dadurch gekennzeichnet, dass** die optische Sensorvorrichtung (12) eine Kamera ist.

4. Thermisches Spritzverfahren nach Anspruch 1 oder 2, **dadurch gekennzeichnet, dass** die optische Sensorvorrichtung (2) ein Lasersensor ist.

5. Thermischer Spritzbrenner (11) zur Durchführung eines thermischen Spritzverfahrens gemäß einem der vorhergehenden Ansprüche und zum Aufbringen einer thermischen Spritzschicht auf die Innenfläche eines Zylinders (10) einer Brennkraftmaschine oder Kolbenmaschine, wobei der thermische Spritzbrenner (11) aufweist:
- eine optische Sensorvorrichtung (12) zum optischen Erfassen der Umgebung (15) des Spritzstrahls (13), nämlich eines Raums Außerhalb des Spritzstrahls (13), wobei die optische Sensorvorrichtung (12) auf einen Bereich (15) oberhalb der oberen Grundfläche (17) des Zylinders (10) ausgerichtet ist, um Partikel (16) des Spritzwerkstoffs (14) außerhalb des Spritzstrahls (13) zu detektieren.

## Claims

1. Thermal spraying method for coating the inner surface (24) of a cylinder (10) of an internal combustion engine or piston engine, the method comprising the following steps:
- applying a thermal spray layer (24) to the inner surface (26) of the cylinder (10), and
- optically detecting the surroundings (15) of the spray jet (13), namely a space outside the spray jet (13), by means of an optical sensor device (12),
wherein, if the optical sensor device (12) detects particles of the spray material (14) supplied to the spray torch (11) in the monitored area (15) outside the spray jet (13) and above the upper base surface (17) of the cylinder (10), i.e. outside the cylinder (10), the parameters of which particles exceed a defined threshold, the coating process is assumed to be defective.

2. Thermal spraying method of claim 1, **characterized in that** an error in the coating process is assumed if the size, frequency of occurrence, light intensity, velocity and/or trajectory and the length of the trajectory of the particles (16) of the spray material (14) detected outside the spray jet (13) or the mathematical derivation or accumulation of said parameters exceed a defined threshold.

3. Thermal spraying method of claim 1 or 2, **characterized in that** the optical sensor device (12) is a camera.

4. Thermal spraying method of claims 1 or 2, **characterized in that** the optical sensor device (12) is a laser sensor.

5. Thermal spray torch (11) for performing a thermal spraying method of one of the preceding claims and for applying a thermal spray layer on the inner surface of a cylinder (10) of an internal combustion engine or a piston engine, wherein the thermal spray torch (11) comprises:
- an optical sensor device (12) for optically detecting the surroundings (15) of the spray jet (13), namely a space outside the spray jet (13), wherein the optical sensor device (12) is oriented to a region (15) above the upper base surface (17) of the cylinder (10) in order to detect particles (16) of the spray material (14) outside the spray jet (13).

## Revendications

1. Procédé de projection thermique pour le revêtement de la surface intérieure (24) d'un cylindre (10) d'un moteur à combustion interne ou d'un moteur à piston, le procédé comprenant les étapes suivantes:
- application d'une couche de projection thermique (24) sur la surface intérieure (26) du cylindre (10),
- détection optique de l'environnement (15) du jet de projection (13), à savoir un espace à l'extérieur du jet de projection (13) par un dispositif capteur optique (12),
dans lequel, si des particules du matériau de projection (14), qui est envoyé au torche de projection (11), sont détectées dans la zone surveillée (15) à l'extérieur du jet de projection (13) et au-dessus de la surface de base supérieure (17) du cylindre (10), c'est à dire à l'extérieur du cylindre (10), par le dispositif capteur optique (12), dont les paramètres dépassent une valeur de seuil définie, une erreur dans le processus de revêtement est supposée.

2. Procédé de projection thermique selon la revendication 1, **caractérisé en ce que** l'on suppose une erreur dans le processus de revêtement si la taille, la fréquence, l'intensité lumineuse, la vitesse de vol et/ou la trajectoire et leur longueur des particules (16) du matériau de projection (14) détectées à l'extérieur du jet de projection (13) ou la dérivation mathématique ou la somme des quantités mentionnées dépasse une valeur seuil définie.

3. Procédé de projection thermique selon les revendications 1 ou 2, **caractérisé en ce que** le dispositif capteur optique (12) est une caméra.

4. Procédé de projection thermique selon les revendications 1 ou 2, **caractérisé en ce que** le dispositif capteur optique (2) est un capteur laser.

5. Torche à projection thermique (11) pour la mise en œuvre du procédé selon l'une des revendications précédentes et pour appliquer une couche de projection thermique sur la surface intérieure d'un cylindre (10) d'un moteur à combustion interne ou d'une machine à pistons, le torche à projection thermique (11) comprenant:
- un dispositif capteur optique (12) pour détecter optiquement l'environnement (15) du jet de projection (13), à savoir un espace à l'extérieur du jet de projection (13), le dispositif capteur optique (12) étant orienté sur une région (15) au-dessus de la surface de base supérieure (17) du cylindre (10) pour détecter les particules (16) du matériau de projection (14) à l'extérieur du jet de projection (13).
